## Europäisches Patentamt
## European Patent Office
## Office européen des brevets

(19)

(11) Veröffentlichungsnummer: **0 176 807**
**B1**

(12)

# EUROPÄISCHE PATENTSCHRIFT

(45) Veröffentlichungstag der Patentschrift:
**28.10.87**

(21) Anmeldenummer: **85111319.1**

(22) Anmeldetag: **07.09.85**

(51) Int. Cl.⁴: **B 65 G 21/14**

(54) **Steilförderer.**

(30) Priorität: **27.09.84 DE 3435479**

(43) Veröffentlichungstag der Anmeldung:
**09.04.86 Patentblatt 86/15**

(45) Bekanntmachung des Hinweises auf die Patenterteilung:
**28.10.87 Patentblatt 87/44**

(84) Benannte Vertragsstaaten:
**AT DE FR GB SE**

(56) Entgegenhaltungen:
**DE - A - 2 108 230**
**DE - A - 3 130 510**
**GB - A - 1 112 369**

(73) Patentinhaber: **Fried. Krupp Gesellschaft mit beschränkter Haftung, Altendorfer Strasse 103, D-4300 Essen 1 (DE)**

(72) Erfinder: **Kostrewa, Ludwig, Ludwig-Richter-Ring 254, D-4130 Moers 1 (DE)**

**Beschreibung**

Die Erfindung bezieht sich auf einen mit einem Gelenk zum Ausschwenken seines unteren Teils aus der Strecklage versehenen Steilförderer nach dem Oberbegriff des Anspruchs 1.

Ein solcher Steil- oder Senkrechtförderer zur Aufnahme von Schüttgütern, der aus der DE-OS 31 30 510 vorbekannt ist, weist das Gelenk zum Ausschwenken etwa in der Mitte seiner senkrechten Erstreckung auf, so dass diese in zwei etwa gleichlange Teile unterteilt wird. Am unteren Ende des unteren Teils ist ein in Schwenkrichtung abgebogene Ende angelenkt, das ein Schaufelrad als Gutaufnahmegerät trägt. Im Bereich des Schwenkgelenks sind bei diesem mit einem Bandelevator als Gurtband versehenen Förderer beide Trume des Bandelevators beidseitig mit Umlenkrollensätzen abgestützt. Der Ausschwenkwinkel des unteren Teils des Förderers ist aber relativ klein, weil sich bei dieser Einrichtung Dehnungen und Stauchungen des Bandelevators ergeben, die ein gewisses Mass nicht überschreiten dürfen.

Der Erfindung liegt die Aufgabe zugrunde, einen Steilförderer der eingangs genannten Art so auszubilden, dass auch bei grösseren Auslenkungen seines unteren Teils Veränderungen der Gurtbandspannung vermieden werden. Die Lösung der Aufgabe besteht in den Merkmalen des kennzeichnenden Teils des Anspruchs 1.

Die Erfindung ist vielseitig einsetzbar. So können verschiedene Arten von mit Taschen, Bechern, Eimern od. dgl. Behältern versehene Gurt- bzw. Gliederbänder eingesetzt werden. Dabei kann das z.B. mit einem geeigneten Becherwerk ausgerüstete Gurband am abgebogenen unteren Ende des unteren Teils das Schüttgut direkt abtragen, aufnehmen und fördern oder dem Gurtband kann eines der verschiedenen zufördernden Grabeorgane, wie Schaufelrad, Becherwerk, Schaufelwalze od. dgl. vorgeschaltet werden. Für diesen Fall ist die Verwendung sog. Wellenkanten- oder Wellkantengurte als Gurtband besonders vorteilhaft.

Der Einsatz des neuen Steilförderers ist überall da besonders vorteilhaft, wo Schächte, Schiffsluken oder andere Engstellen zu durchdringen sind. Sein oberer Teil ist dabei in der Regel senkrecht eingestellt, kann jedoch für besondere Fälle auch schräg eingestellt werden, z.B. für das Entladen von Bargen oder Lastkähnen.

Weitere vorteilhafte Ausgestaltungen der Erfindung sind Gegenstand der Ansprüche 2 bis 10.

Mehrere Ausführungsbeispiele der Erfindung sind in der Zeichnung schematisch wiedergegeben und werden nachfolgend näher erläutert. Es zeigen in Ansicht:

Fig. 1 den unteren Teil eines mit einem Schaufelrad ausgerüsteten Steilförderers in angenäherter Strecklage,

Fig. 2 den Steilförderer nach Fig. 1 ausschnittsweise in ausgeschwenkter Stellung,

Fig. 3 eine Ausführungsform entsprechend Fig. 1 mit Kettenbecherwerk anstelle des Schaufelrads,

Fig. 4 eine andere Ausführungsform des unteren Teils mit Schaufelrad,

Fig. 5 eine weiter abgewandelte Ausführungsform des unteren Teils mit einer Schaufelwalze und

Fig. 6 einen mit einem Kettenbecherwerk als Gurtband ausgerüsteten Steilförderer.

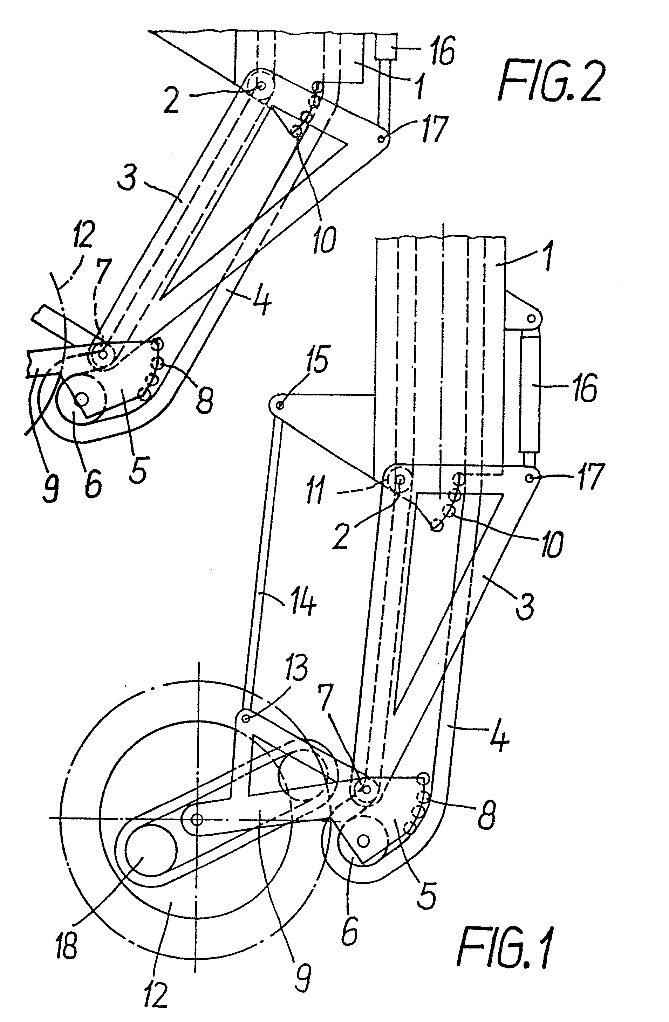

Wie aus Fig. 1 ersichtlich, weist de Steilförderer ein Oberteil 1 und ein an seiner Ausschwenkseite in einer Achse 2 angelenktes Unterteil 3 auf. Oberteil und Unterteil bilden das Gerüst des Steilförderers, in welchem ein endloser Wellkantengurt 4 als Gurtband gelagert ist. Der nicht gezeigte Kopf des Oberteils 1 weist einen Antrieb für den Wellkantengurt 4 und eine Übergabestelle für das geförderte Schüttgut auf und ist an einem ebenfalls nicht dargestellten, mit einem weiterfördernden Fördergurt od. dgl. versehenem Ausleger eines Kaikranes oder einer Brücke heb-, senk- und drehbar befestigt, und somit für die Schiffsentladung bestimmt.

Das untere Ende 5 des Wellkantengurts 4 ist in der Richtung seines Ausschwenkens abgebogen und weist an seinem Ende eine Umlenktrommel 6 auf. Am Beginn der Biegung des abgebogenen Endes 5 sind an der Bogeninnenseite mit Abstand zueinander zwei achsgleiche, also ein Paar bildende Umlenkrollen 7 für den Wellkantengurt 4 gelagert, die gleichzeitig die innere Führungsbahn des Wellkantengurts bilden und deren Achse Mittelpunkt der äusseren Führungsbahn 8 ist, die aus vier trommelartigen Umlenkrollen besteht, an denen der Wellkantengurt 4 aussen vorbeigeführt ist. Die oberste Umlenkrolle der Führungsbahn 8 liegt in der gleichen horizontalen Ebene wie die Achse der Umlenkrollen 7, die wie die Führungsbahn 8 an einem Ausleger 9 angeordnet ist, welcher um die Achse des Umlenkrollen-Paares 7 schwenkbar ist. Am oberen Teil 1 ist eine ebenfalls aus vier, ebenfalls trommelartigen Umlenkrollen bestehende Führungsbahn 10 fest angeordnet, wobei der Mittelpunkt der Kreisbahn, die die Führungsbahn bildet, durch die Achse 2 dargestellt ist. Die Schwenkachse 2 ist auch die Achse eines Umlenkrollen-Paares 11, das den Wellkantengurt an der Ausschwenkseite stützt. Die Radien der Führungsbahnen 8 und 10 sowie die Durchmesser der Umlenkrollen-Paare 7 und 11 und die der Stützrollen der Führungsbahnen sind jeweils gleich. Der ein Schaufelrad 12 tragende Ausleger 9 ist an einem Gelenk 13 über eine Stange 14 mit einem vorkragenden Anlenkpunkt 15 am oberen Teil 1 verbunden. Die jeweiligen Masse sind so gewählt, dass die Achsen der Positionen 2, 7, 13 und 15 ein Parallelogramm begrenzen. An der der Ausschwenkseite bzw. der Stange 14 gegenüberliegenden Seite ist am Oberteil 1 ein Hydraulikzylinder 16 angelenkt, dessen anderes Ende an einem in der Strecklage des Steilförderers etwa senkrecht darunterliegenden Anlenkpunkt 17 angreift und das Ausschwenken des unteren Teils 3 bewirkt. Das durch das Schaufelrad 12 aufgenommene Fördergut gelangt über einen Band-Zwischenförderer 18 in die Taschen des Wellkantengurtes 4 im Bereich des abgebogenen Endes 5 und wird dann nach oben zur nicht dargestellten Übergabestelle gefördert.

Fig. 2 zeigt den unteren Teil 3 des Steilförderers nach Fig. 1 in der ausgeschwenkten Endstellung. Auf dem Weg dahin löst sich das nicht auf der Ausschwenkseite verlaufende Trum des Wellkantengurts 4 von der unteren Führungsbahn 8 und legt sich in entsprechender Weise näher an die oberen Führungsbahn 10 an, d.h. es wird von der unteren Führungsbahn ab- und auf die obere Führungsbahn aufgewickelt. Das gleich gilt für die inneren Führungsbahnen, welche die Umlenkrollen-Paare 11 und 7 für das auf der Ausschwenkseite verlaufende Trum des Wellkantengurtes 4 bilden. Da bei dem Wellkantengurt sonst keine Lageveränderungen entstehen, bleibt die Gurtspannung unverändert. Der Ausschwenkwinkel kann dadurch vergrössert werden, dass das Bogenmass der unteren und oberen Führungsbahnen jeweils um den gleichen Betrag verlängert wird.

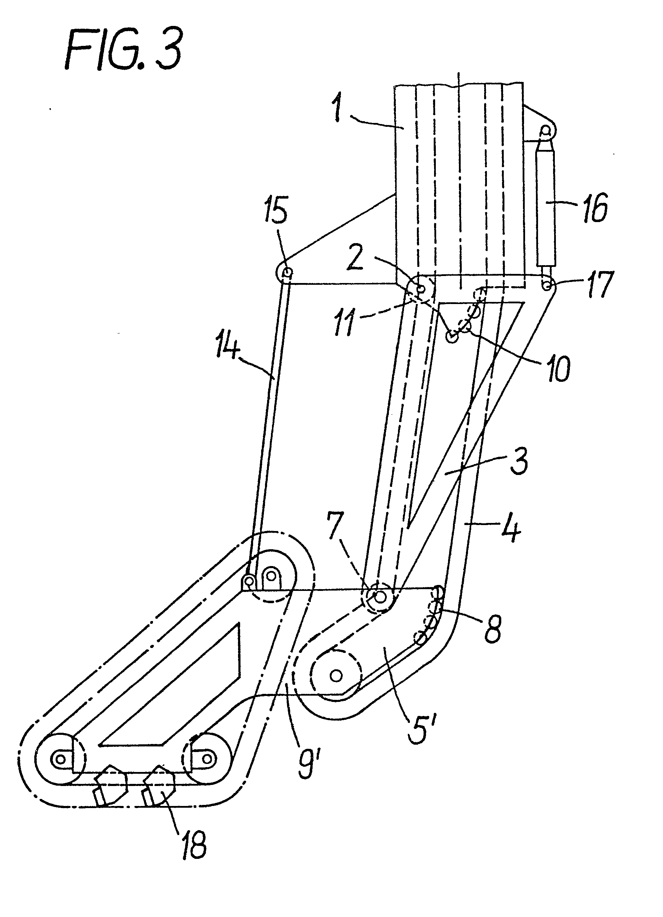

Der Steilförderer nach Fig. 3 unterscheidet sich von dem vorhergehenden Ausführungsbeispiel lediglich dadurch, dass das untere Ende 5' des unteren Teils 3 etwas verlängert ist und der entsprechend verändert gestaltete Ausleger 9' ein umlaufendes Kettenbecherwerk 18 als Grabeorgan trägt. Das Kettenbecherwerk 18, das über drei Eckumlenkrollen geführt ist, von denen die zwei unteren etwa in einer horizontalen Ebene liegen, wirft das aufgenommene Fördergut direkt auf das untere Ende 5' über Kopf ab.

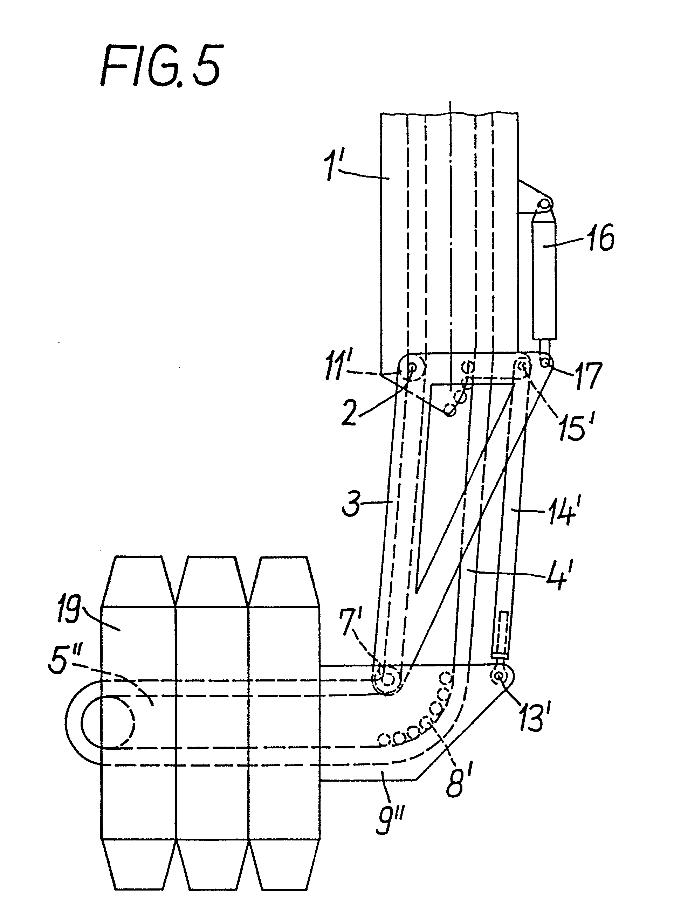

Beim Steilförderer nach Fig. 5 ist eine Stange 14' an der der Ausschwenkseite abgewandten Seite am unteren Ende des oberen Teils 1' an einem Anlenkpunkt 15' angehängt. Ihr unterer Anlenkpunkt 13' ist so an einem Ausleger 9'' angeordnet, dass die Anlenkpunkte 15', 13' zusammen mit den Achsen der Umlenkrollen 11' und 7' wieder ein Parallelogramm begrenzen. Mit der Achse der Umlenkrolle 7' ist der Ausleger 9'' am unteren Teil 3 angelenkt, welches selbst wieder über die Schwenkachse 2 am Oberteil 1' angelenkt ist. Die Schwenkachse 2 ist wieder gleichzeitig Achse des Umlenkrollen-Paares 11'. Als Gurtband dient hierbei wieder ein Wellkantengurt 4', welcher an einem verlängerten abgebogenen Ende 5'' axial durch eine Schaufelwalze 19 hindurchgeführt ist. Wegen der stärkeren, nahezu rechtwinkligen Abbiegung des unteren Endes 5'' ist die ebenfalls aus Stützrollen gebildete untere Führungsbahn 8' entsprechend verlängert. Die Ausschwenkung des unteren Teils 3 wird in gleicher Weise wie beim vorhergehenden Beispiel durch einen Hydraulikzylinder 16 bewirkt.

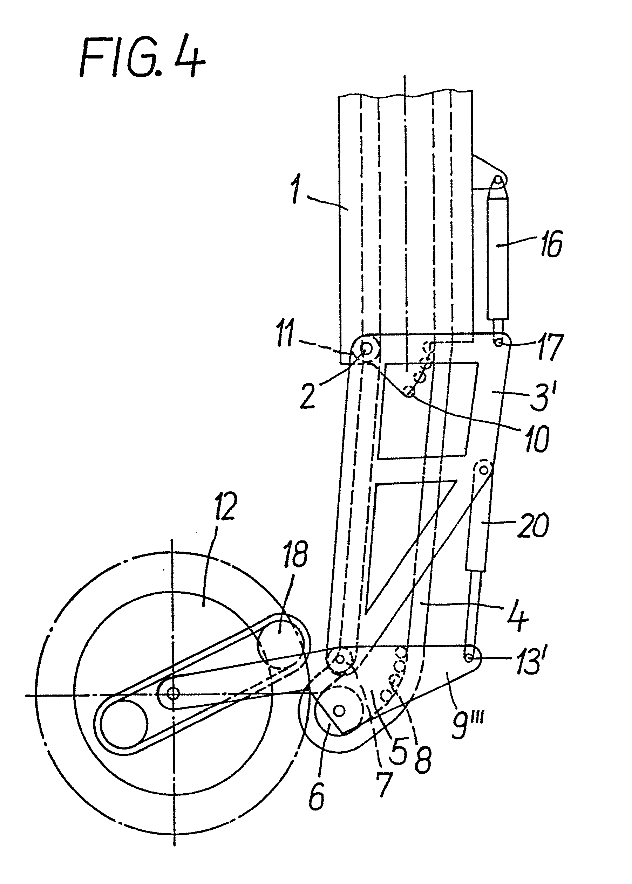

Bei der Ausführungsform eines Steilförderers nach Fig. 4 weist der Ausleger 9''' wie beim vorhergehenden Ausführungsbeispiel einen der Ausschwenkseite abgewandten Angriffspunkt 13' auf, an dem ein mit seinem anderen Ende am unteren Teil 3' angelenkter Hydraulikzylinder 20 angreift. Schwenkachse 2, unteres Umlenkrollen-Paar 7 und Angriffspunkt 17 des Hydraulikzylinders 16 sind identisch mit dem Ausführungsbeispiel nach Fig. 1. Da die Hebelarme beider Angriffspunkte (Zylinder 16 am Angriffspunkt 17 einerseits sowie Zylinder 20 am Angriffspunkt 13' andererseits) gleich sind, wird die Parallelführung der Führungsbahnen 10 und 8 dadurch bewirkt, dass beim Ausschwenken der Zylinder 16 ausgefahren und der Zylinder 20 mit der gleichen Verstellgeschwindigkeit eingefahren wird. Am Ausleger 9''' ist wieder ein Schaufelrad 12 mit einem Zwischen-Bandförderer 18 angeordnet.

Die Ausleger 9, 9', 9'' und 9''' mit der unteren Führungsbahn 8 bzw. 8' verschieben sich beim Ausschwenken durch die Parallelogramm-Aufhängung jeweils in Ebenen, die stets parallel zueinander verlaufen. Das ist besonders vorteilhaft für die Ausführungen mit dem Kettenbecherwerk nach Fig. 3 und mit der Schaufelwalze nach Fig. 5.

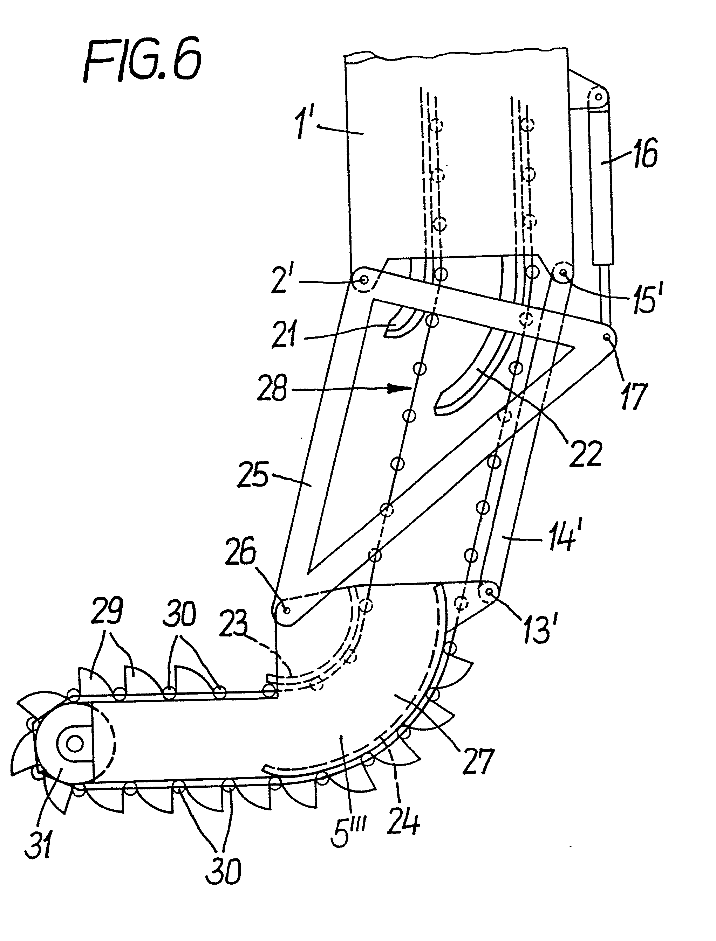

Der Steilförderer nach Fig. 6 weist im Gegensatz zu den vorhergehenden Ausführungsformen als Führungsbahnen Schienen auf. Dabei werden die oberen Führungsbahnen durch Schienenpaare 21 und 22 und die unteren Bahnen durch Schienenpaare 23 und 24 gebildet. Der untere Teil 25, der wieder bezogen auf die Schwenkebene etwa eine Dreiecksform aufweist, ist am oberen Teil 1', welches die Führungsbahnen 21 und 22 trägt, an der Schwenkachse 2' angelenkt. Die Achse 26 der unteren Führungsbahnen 23 und 24 ist gleichzeitig Schwenkachse für einen das abgebogene Ende 5''' des Gurtbandes aufnehmenden Ausleger 27, der die Führungsbahnen 23 und 24 trägt und über die Achse 26 am unteren Teil 25 angelenkt ist. Der Ausleger 27 weist ferner einen Anlenkpunkt 13' auf, der wieder über eine Stange 14' mit dem oberen Teil 1' über dessen Anlenkpunkt 15' verbunden ist. Die Achsen 2', 26, 13' und 15' bilden entsprechend der Ausführungsform nach Fig. 5 die Eckpunkte eines Parallelogramms. Im weiteren Unterschied zu den vorhergehenden Ausführungsbeispielen wird hier als Gurtband ein Kettenbecherwerk 28 eingesetzt, bei dem zwischen den einzelnen Bechern 29 jeweils Führungsrollenpaare 30 gelagert sind, die sich an den Schienenpaaren der Führungsbahnen abstützen und am freien Ende des Auslegers 27 über eine Umlenkrolle 31 geführt sind. Die als Schienenpaare ausgebildeten Führungsbahnen haben die gleiche Funktion wie die durch Rollenkurven bzw. Umlenkrollen gebildeten Führungsbahnen nach den vorhergehenden Ausführungsbeispielen. Der Ausleger 27 erstreckt sich mit seinem freien Ende eine gewisse Strecke in der Horizontalen bzw. parallel zum Planum und behält beim Ausschwenken des unteren Teils 25 diese horizontale Lage bei, wie das für die Ausleger 9 bis 9''' gilt.

Beim Steilförderer nach Fig. 4 ist es möglich, in der Strecklage durch weiteres Einfahren des Hydraulikzylinders 20 das am freien Ende des Auslegers 9''' gelagerte Schaufelrad 12 nach unten abzusenken, so dass die seitliche Ausladung des Steilförderers verringert wird, um Schiffsluken oder andere Engpässe besser passieren zu können. Durch entsprechende Gestaltung kann die seitliche Ausladung nahezu oder sogar vollständig beseitigt werden. Es ist ausserdem möglich, zu dem gleichen Zweck den unteren Teil des Steilförderers über die Strecklage hinaus im Sinne eines negativen Ausschwenkwinkels zu verschwenken. Bei den anderen Ausführungsbeispielen können zu der Erzielung der geringeren Ausladung der Grabeorgane die Stangen 14 bzw. 14' längenveränderbar ausgebildet sein, z.B. durch die Verwendung eines teleskopierbaren Organs, wie einem Hydraulikzylinder.

Die Stangen 14 und 14' sowie die Hydraulikzylinder 16 und 20 sind in der Regel doppelt ausgeführt, d.h. dass zwei parallel zueinander angeordnete und — falls zweckmässig — auch starr miteinander verbundene Stangen bzw. Zylinder eingesetzt werden.

Die dem oberen Ausschwenk-Gelenk bzw. der entsprechenden unteren Achse zugeordneten Führungsbahnen können — je nach konstruktiver Zweckmässigkeit im Einzelfall und abweichend von den Ausführungsbeispielen — prinzipiell an jedem der aneinander angelenkten Teile befestigt sein.

## Patentansprüche

1. Mit einem Gelenk zum Ausschwenken seines unteren Teils aus der Strecklage und einem endlosen Gurtband o.dgl. versehener Steilförderer, bei dem das Taschen, Becher o.dgl. Behälter aufweisende Gurtband am unteren Ende des unteren Teils in Schwenkrichtung abgebogen ist, dadurch gekennzeichnet, dass die Achse (2, 2') des Gelenks ausserhalb der Abstützung des Gurtbands auf der Ausschwenkseite liegt und gleichzeitig Mittelpunkt von kreisbogenförmigen oberen Führungsbahnen für die beiden Trume des Gurtbands ist, und der Anfang der sich ggf. nach unten fortsetzenden Abstützung der Trume an den Führungsbahnen etwa in der horizontalen Ebene der Achse (2, 2') liegt, und dass das abgebogene Ende (5, 5', 5'', 5''') des Gurtbands am Beginn des Bogens kreisbogenförmige untere Führungsbahnen mit gleichen Radien wie die oberen Führungsbahnen aufweist, die um ihre ebenfalls an der Ausschwenkseite angeordnete Achse drehbar sind, und die oberen und unteren Führungsbahnen in Umfangsrichtung jeweils mindestens so weit geführt sind, dass die Gurte in jeder Ausschwenkstellung den jeweiligen Führungsbahn-Radius beibehalten.

2. Steilförderer nach Anspruch 1, dadurch gekennzeichnet, dass die Führungsbahnen zumindest teilweise durch Rollen (8, 8', 10) gebildet werden.

3. Steilförderer nach Anspruch 2, dadurch gekennzeichnet, dass die inneren Führungsbahnen durch ein Umlenkrollen-Paar (7, 7', 11, 11') gebildet sind.

4. Steilförderer nach Anspruch 3, dadurch gekennzeichnet, dass die Achse des Umlenkrollen-Paares am abgebogenen unteren Ende des Gurtbands gleichzeitig Schwenkachse eines Auslegers ist.

5. Steilförderer nach Anspruch 4, dadurch gekennzeichnet, dass der Ausleger (9, 9', 9'', 9''') ein Grabegerät trägt.

6. Steilförderer nach Anspruch 4 oder 5, dadurch gekennzeichnet, dass am Ausleger eine Stange (14, 14') bzw. ein paralleles Stangenpaar angelenkt ist, deren bzw. dessen anderes Ende am oberen Teil des Steilförderers angelenkt ist, und die mit den Achsen des Gelenks und des Auslegers ein Parallelogramm bildet.

7. Steilförderer nach Anspruch 6, dadurch gekennzeichnet, dass die Stange längenveränderbar ist.

8. Steilförderer nach einem der vorhergehenden Ansprüche, dadurch gekennzeichnet, dass als Schwenkantrieb für den unteren Teil an diesem mit Abstand von dem Gelenk ein an einem Festpunkt des oberen Teils angelenkter Hydraulikzylinder (16) bzw. ein paralleles Hydraulikzylinder-Paar angreift.

9. Steilförderer nach Anspruch 4 in Verbindung mit Anspruch 8, dadurch gekennzeichnet, dass an dem Ausleger (9''') einerseits und dem unteren Teil (3') andererseits ein weiterer Hydraulikzylinder (20) angreift, der beim Ausschwenken gegenläufig betrieben wird und die Hebelarme der Angriffspunkte beider Zylinder und/oder deren Verstellgeschwindigkeit so abgestimmt ist bzw. sind, dass sich die Parallelführung der Führungsbahnen ständig aufrechterhält.

10. Steilförderer nach Anspruch 9, dadurch gekennzeichnet, dass der auf den unteren Teil (3') und der auf den Ausleger (9''') wirkende Hebelarm gleich ist.

11. Steilförderer nach einem der vorhergehenden Ansprüche, dadurch gekennzeichnet, dass die oberen Führungsbahnen am oberen Teil fest angeordnet sind.

12. Steilförderer nach einem der Ansprüche 4 bis 11, dadurch gekennzeichnet, dass die unteren Führungsbahnen am Ausleger fest angeordnet sind.

## Claims

1. A steep conveyor having a joint for pivoting its lower part outwards from the extended position and an endless belt band or the like, which has pockets, buckets or the like and the lower portion of whose lower end is bent in the pivoting direction, characterized in that the pivot (2, 2') of the joint lies outside the support of the belt band on the outward pivoting side, while at the same time forming the centre of circular upper guideways for the two runs of the belt band, the start of the possibly downward continuing support of the runs on the guideways lying substantially in the horizontal plane of the pivot (2, 2'); the bent end (5, 5', 5'', 5''') of the band belt has at the start of the bent circular lower guideways which have the same radii as the upper guideways and can pivot around their axis, also disposed on the outward pivoting sides; and the upper and lower guideways each extend in the peripheral direction at least far enough for the bands to retain the appropriate guideway radius in every outward pivoting position.

2. A steep conveyor according to Claim 1, characterized in that the guideways are at least partially formed by rollers (8, 8', 10).

3. A steep conveyor according to Claim 2, characterized in that the inner guideways are formed by a pair of deflecting rollers (7, 7', 11, 11').

4. A steep conveyor according to Claim 3, characterized in that the pivot of the pair of deflecting rollers at the bent lower end of the belt band is also the pivot of a jib.

5. A steep conveyor according to Claim 4, characterized in that the jib (9, 9', 9'', 9''') carries a digging apparatus.

6. A steep conveyor according to Claims 4 or 5, characterized in that articulated to the jib is a rod (14, 14') or a pair of parallel rods whose other end is articulated to the upper portion of the steep conveyor and which cooperates with the pivots of the joint and the jib to form a parallelogram.

7. A steep conveyor according to Claim 6, characterized in that the length of the rod can be changed.

8. A steep conveyor according to one of the preceding Claims, characterized in that a hydraulic cylinder (16) or a pair of parallel hydraulic cylinders articulated to a fixed point on the upper portion engages with the lower portion at a distance from the joint as a pivoting drive for such lower portion.

9. A steep conveyor according to Claim 4 in combination with Claim 8, characterized in that a further hydraulic cylinder (20) engages with the jib (9''') on the one hand and the lower portion (3') on the other and is operated to the opposite band during outward pivoting, the lever arms of the points of engagement of the two cylinders and/or their adjustment speed being harmonized in such a way as to always maintain the parallelism of the guideways.

10. A steep conveyor according to Claim 9, characterized in that the same lever arm acts on the lower portion (3') and the jib (9''').

11. A steep conveyor according to one of the preceding Claims, characterized in that the upper guideways are disposed rigidly on the upper portion.

12. A steep conveyor according to one of Claims 4 to 11, characterized in that the lower guideways are disposed rigidly on the jib.

**Revendications**

1. Convoyeur élévateur pourvu d'une articulation destinée à faire pivoter sa partie inférieure hors de la position linéaire et d'une bande à courroie sans fin ou similaire, dans lequel la courroie présentant des poches, des godets ou conteneurs similaires est recourbée à l'extrémité inférieure de la partie inférieure dans le sens du pivotement, caractérisé en ce que l'axe (2, 2') de l'articulation se situe à l'extérieur de l'appui de la courroie sur le côté de pivotement et est en même temps le centre de voies de guidage supérieures en forme d'arc de cercle pour les deux brins de la bande et en ce que le début de l'appui des brins contre les voies de guidage, se prolongeant éventuellement vers le bas, se situe dans le plan horizontal de l'axe (2, 2') et en ce que l'extrémité recourbée (5, 5', 5'', 5''') de la bande présente au début de l'arc, des voies de guidage inférieures en forme d'arc de cercle dont les rayons sont égaux à ceux des voies de guidage supérieures, qui peuvent tourner autour de leur axe disposé également côté pivotement, et en ce que les voies de guidage supérieures et inférieures vont suffisamment loin dans leur direction périphérique pour que les courroies conservent le rayon de la voie de guidage en toute position de pivotement.

2. Convoyeur élévateur selon la revendication 1, caractérisé en ce que les voies de guidage sont formées au moins en partie par des rouleaux (8, 8', 10).

3. Convoyeur élévateur selon la revendication 2, caractérisé en ce que les voies de guidage intérieures sont formées par une paire de poulies de renvoi (7, 7', 1, 11').

4. Convoyeur élévateur selon la revendication 3, caractérisé en ce que l'axe de la paire de poulies de renvoi est en même temps, à l'extrémité inférieure recourbée de la bande, l'axe de pivotement d'un bras.

5. Convoyeur élévateur selon la revendication 4, caractérisé en ce que le bras (9, 9', 9'', 9''') porte un dispositif excavateur.

6. Convoyeur élévateur selon la revendication 4 ou 5, caractérisé en ce qu'une tringle (14, 14') ou une paire de tringles parallèles s'articule sur le bras, et dont l'autre extrémité s'articule sur la partie supérieure du convoyeur élévateur, et qui forme un parallélogramme avec les axes de l'articulation et du bras.

7. Convoyeur élévateur selon la revendication 6, caractérisé en ce que la tringle a une longueur variable.

8. Convoyeur élévateur selon l'une des revendications ci-dessus, caractérisé en ce qu'un vérin hydraulique (16) ou une paire de vérins hydrauliques parallèles, articulé(e) sur un point fixe de la partie supérieure et servant de mécanisme de pivotement pour la partie inférieure, agit sur celle-ci à une certaine distance de l'articulation.

9. Convoyeur élévateur selon la revendication 4, en liaison avec la revendication 8, caractérisé en ce qu'un autre vérin hydraulique (20) agit d'une part sur le bras (9''') et d'autre part sur la partie inférieure (3'), qui est actionné en sens inverse pendant le pivotement et en ce que les bras de leviers des points d'intervention des deux vérins et/ou leur vitesse de déplacement est (sont) réglé(s) de telle sorte que le guidage parallèle des voies de guidage est maintenu en permanence.

10. Convoyeur élévateur selon la revendication 9, caractérisé en ce que le bras de levier agissant sur la partie inférieure (3') et celui agissant sur le bras (9''') est le même.

11. Convoyeur élévateur selon l'une des revendications ci-dessus, caractérisé en ce que les voies de guidage supérieures sont disposées de manière fixe sur la partie supérieure.

12. Convoyeur élévateur selon l'une des revendications 4 à 11, caractérisé en ce que les voies de guidage inférieures sont disposées de manière fixe sur le bras.

FIG.2

FIG.1

# FIG. 3

# FIG. 4

FIG.5

FIG.6